# EUROPÄISCHE PATENTSCHRIFT

(11) **EP 3 513 959 B1**
(45) Veröffentlichungstag und Bekanntmachung des Hinweises auf die Patenterteilung: **29.03.2023**
(21) Anmeldenummer: 18210408.3
(22) Anmeldetag: 05.12.2018
(51) Int. Cl.: B29C 45/37, G02B 5/124, B29D 11/00

(54) **RETROREFLEKTORELEMENT ZUR VERWENDUNG IM STRASSENVERKEHR**
RETROREFLECTOR ELEMENT FOR USE IN ROAD TRANSPORT
ÉLÉMENT RÉTRORÉFLECTEUR DESTINÉ À L'UTILISATION DANS LE TRANSPORT ROUTIER

(30) Priorität: 22.01.2018 DE 102018101292
(43) Veröffentlichungstag der Anmeldung: 24.07.2019
(73) Patentinhaber: Gubela, Hans-Erich, 77876 Kappelrodeck (DE)
(72) Erfinder: Gubela, Hans-Erich, 77876 Kappelrodeck (DE)
(74) Vertreter: Patentanwälte Bregenzer und Reule Partnerschaftsgesellschaft mbB

(56) Entgegenhaltungen:
- US-A- 3 716 445

## Beschreibung

Die vorliegende Erfindung dient dazu, Retroreflektoren zur Verwendung im Straßenverkehr, insbesondere zur Markierung von Betonleitwänden an Baustellen bereit zu stellen, die nicht nur unter den normungsgemäß vorgesehenen Beobachtungswinkeln die Rückstrahlanforderungen erfüllen, sondern zumindest auch unter den Zwischenwinkeln bzw. unter allen Winkelverhältnissen, die beim Fahren auf einer mehrspurigen Straße zu einem Retroreflektor auftreten, gut sichtbar sind.

Es sind verschiedene Typen von Retroreflektoren bekannt. Einen bekannten Typ von reflektierenden oder retroreflektierenden Elementen stellen beispielsweise Folien mit eingebetteten Mikrokugeln vor einer spiegelnden Schicht dar. Im Allgemeinen einen deutlich höheren Retroreflektions- und damit Wirkungsgrad als solche Mikrokugel basierten Folien weisen reflektierende Elemente auf, die ein oder mehrere Cube-Corner-Elemente zur Retroreflektion umfassen. Eine solche Cube-Corner ("Würfelecke") besteht dabei aus drei jeweils im Wesentlichen senkrecht zueinanderstehenden Flächen und wird Tripel genannt. Ein entsprechender Retroreflektor umfasst dabei im Allgemeinen eine Vielzahl solcher Tripel. Tripelstrukturen lassen sich wiederum unterscheiden in Strukturen, bei denen die Tripel pyramidenartig in Form von Tetraedern angeordnet sind und Strukturen, bei denen eine Würfelecke als Fullcube-Tripel komplett im Material ausgebildet ist.

Retroreflektoren werden nach der DIN 67520 mit Hilfe des Rückstrahlwerts oder des spezifischen Rückstrahlwerts qualifiziert. In der vorliegenden Anmeldung wird der Rückstrahlwert verwendet. Der Rückstrahlwert ist definiert als das Verhältnis zwischen der von einem Retroreflektor in eine bestimmte Richtung zurückgestrahlten Lichtstärke und der auf den Retroreflektor einfallenden Beleuchtungsstärke. Auf die in der DIN 67520 definierten Winkel wird hiermit Bezug genommen. Soweit hier nichts anderes angegeben ist, finden auch im Übrigen hier die in den zitierten Normen angegebenen Definitionen Anwendung. Die Eigenschaften, die Retroreflektoren in Straßenverkehr haben müssen, sind insbesondere in der DIN EN 12899-3 im Abschnitt 6.3.2 beschrieben. Die Norm legt zwei Beobachtungswinkel, nämlich 20 ` (Bogenminuten) und 2 °, fest, unter denen Retroreflektoren im Straßenverkehr Mindestwerte der spezifischen Reflektivität erzielen müssen.

Wenn man sich mit einem Fahrzeug nachts beispielsweise einer Leitwand mit einem Retroreflektor nähert, sind bei gerader Strecke die Beobachtungswinkel sowohl in horizontaler als auch in vertikaler Richtung zunächst sehr klein. Es ist notwendig, den Straßen-, bzw. den Baustellenverlauf auch von weitem zu erkennen. Dafür sind bei kleinem Beobachtungswinkel hohe Rückstrahlwerte erforderlich. Der Strahl des Scheinwerfers sollte möglichst in sich selbst zurückgeworfen werden. Nähert sich das Fahrzeug dem Reflektor, vergrößert sich der Beobachtungswinkel aufgrund des gleich bleibenden vertikalen Abstands zwischen Scheinwerfer und Auge eines Fahrers.

US3716445A offenbart retroreflektierende Folienmaterialien, die in der Lage sind, einfallendes Licht zur Lichtquelle zurückzureflektieren.

Der vorliegenden Erfindung liegt die Aufgabe zugrunde, einen Reflektor zu schaffen, der auch unter Beobachtungswinkeln bis mindestens 2 ° unabhängig von einer möglichen Verdrehung des Reflektors erkennbar ist.

Diese Aufgabe wird durch ein Retroreflektionselement nach Anspruch 1 gelöst.

Die Erfindung bezieht sich auf ein Retroreflektionselement, das eine Anordnung aus einer Vielzahl von Tripeln mit jeweils drei nahezu senkrecht aufeinander stehenden Seitenflächen umfasst. Nahezu senkrecht bedeutet, die Seitenflächen schließen zueinander einen Winkel zwischen 89 ° und 91 ° ein. Vorteilhafterweise werden in einem erfindungsgemäßen Retroreflektorelement Geometrien eingesetzt, in denen die Seitenflächen eines Tripels als vollständige Würfelecken ausgebildet sind. Geometrien mit pyramidalen Strukturen haben gegenüber vollständigen Würfelecken den Nachteil, dass nicht die gesamte Fläche zur Retroreflektion zur Verfügung steht und daher maximal 66 % des einfallenden Lichts zurückgestrahlt wird. Dies führt zu einem geringeren Wirkungsgrad und damit zu geringeren Freiheiten, einfallendes Licht beim Zurückstrahlen in eine gewünschte Richtung zu verteilen.

Ein erfindungsgemäßes Retroreflektonselement hat eine Vorzugsrichtung. Das heißt, bei einer Verdrehung des Retroreflektonselements um eine Mittelsenkrechte gibt es einen Verdrehungswinkel ε, bei dem die Rückstrahlwerte ein Maximum annehmen. Der Verdrehungswinkel kann bezüglich einer Ausrichtung des Retroreflektorelements gemessen werden, in der eine Haupterstreckungsachse des Retroreflektorelements in vertikaler Richtung verläuft. Vorteilhafterweise ist der optimale Verdrehungswinkel 0 °, so dass die Vorzugsrichtung parallel zur Haupterstreckungsachse verläuft und beide Richtungen vertikal relativ zu einer Umgebung verlaufen. Diese Ausrichtung ist beispielsweise bei einer Installation eines erfindungsgemäßen Retroreflektonselements an einer Seitenfläche einer Betonleitwand gegeben.

Als "Beobachtungswinkel parallel zur Vorzugsrichtung" ist eine Messanordnung zu verstehen, in der die Projektion einer Gerade, die durch einen Mittelpunkt einer Lichtquelle und einen Mittelpunkt eines Empfängers geht, auf eine Lichteintrittsfläche des Retroreflektors parallel zur Vorzugsrichtung ist. Dabei wird der Rückstrahlwert unter dem Winkel der zwischen dem Mittelpunkt der Lichtquelle, dem Mittelpunkt des Retroreflektorelements und dem Mittelpunkt des Empfängers eingeschlossen wird, gemessen. Dementsprechend ist als "Beobachtungswinkel senkrecht zur Vorzugsrichtung" eine Messanordnung zu verstehen, in der die Projektion der Gerade, die durch den Mittelpunkt der Lichtquelle und den Mittelpunkt des Empfängers geht, auf die Lichteintrittsfläche mit der Vorzugsrichtung einen rechten Winkel bildet und der Rückstrahlwert wie oben gemessen wird. Ein Beobachtungswinkel senkrecht zur Vorzugsrichtung wird z. B. dann eingenommen, wenn das Retroreflektonselement an einer Fußfläche einer Betonleitwand beispielsweise zur Baustellenabsicherung angebracht ist. In dieser Anordnung erstreckt sich das Retroreflektroelement in horizontaler Richtung, in der dann auch die Vorzugsrichrichtung liegt, während eine Achse zwischen Scheinwerfer und Auge eines Fahrers eines sich nähernden Fahrzeugs näherungsweise in vertikaler Richtung liegt. Auch unter diesen Bedingungen ist das erfindungsgemäße Retroreflektorelement noch mindestens bis zu einem Beobachtungswinkel von 2 ° sichtbar.

Das Retroreflektorelement ist erfindungsgemäß in mehrere Reflektionsbereiche unterteilt. Die Tripel eines ersten Reflektionsbereichs sind dazu konstruiert, einfallende Lichtstrahlen unter einer engen Winkelverteilung parallel zur Vorzugsrichtung zu reflektieren. Um eine möglichst gute Retroreflektionsleistung zu erzielen, sind in dem ersten Reflektionsbereich auch kleine Abweichungen vom rechten Winkel der Seitenflächen unerwünscht. Bis auf Produktionsfehler im Bereich von höchstens 5' vorzugsweise höchstens 1' stehen die Seitenflächen der Tripel des ersten Reflektionsbereichs vorteilhafterweise exakt senkrecht aufeinander.

Der zweite Reflektionsbereich ist dazu konstruiert, einen anderen Teil des auf das Retroreflektionselement einfallenden Lichts unabhängig von der Vorzugsrichtung in einem Beobachtungswinkel zwischen 0 ° und 2 ° zu reflektieren. Der zweite Reflektionsbereich sorgt dafür, dass das Retroreflektionselement bei einem Beobachtungswinkel bis mindestens 2 ° auch senkrecht zur Vorzugsrichtung sichtbar bleibt. Beispielsweise kann der zweite Reflektionsbereich auch Licht, das von einem Scheinwerfer auf einer Beifahrerseite eines Fahrzeugs ausgeht, in das Auge eines Fahrers reflektieren. Für die Tripel des zweiten Reflektionsbereichs sind Abweichungen bis zu einem Grad vom rechten Winkel der Seitenflächen zueinander möglich.

Die Herstellung des erfindungsgemäßen Retroreflektionselements kann beispielsweise im Spritzguss erfolgen. Es sind auch andere Herstellungsverfahren und Abformungsverfahren denkbar, z.B. eine Prägung als Folie. Eine geeignete Spritzgussform weist demnach ein Formnest für einen ersten Reflektionsbereich und ein Formnest für einen zweiten Reflektionsbereich auf. Die Tripel der Formnester sind Negative der Tripel des Reflektionselements. Demnach ist das Formnest des ersten Reflektionsbereichs dafür konstruiert, Tripel herzustellen, die Licht in einer Vorzugsrichtung reflektieren. Das Formnest des zweiten Reflektionsbereichs ist dazu konstruiert, Tripel mit Winkelverteilung des zurückgeworfenen Lichts unabhängig von einer Vorzugsachse herzustellen.

Gemäß einem Aspekt der vorliegenden Erfindung sind die Tripel des zweiten Reflektionsbereichs auf einer gekrümmten Oberfläche angeordnet. Bevorzugt ist die Oberfläche sphärisch gekrümmt. Dadurch kann eine Weitwinkligkeit sowohl in horizontaler als auch in vertikaler Beobachtungsrichtung verbessert werden.

Allerdings sollte die Krümmung der Oberfläche nicht zu stark gewählt werden. Ein Krümmungsradius, der zwischen 100 und 300 mal größer ist als eine Schlüsselweite der Tripel, also ein Abstand zwischen zwei Spitzen, an denen sich die drei Seitenflächen eines Tripels schneiden, hat sich als vorteilhaft erwiesen. Besonders geeignet ist ein Faktor zwischen 175 und 225. Außerdem ist es vorteilhaft, wenn der zweite Reflektionsbereich zwei Unterbereiche aufweist, die zueinander derart gespiegelt sind, dass die Krümmungen an der Spiegelebene einen Sattel bilden. Der Sattel kann z.B. durch ein in zwei Hälften geteiltes Kugelsegment beschrieben werden, dessen beide Hälften seitlich vertauscht sind. Am Sattel schneiden sich also Oberflächenabschnitte zweier Kugeln mit gleichem Radius, deren Mittelpunkte zueinander verschoben sind. Der Sattel steht bevorzugt senkrecht auf einer Trennebene zwischen dem ersten und dem zweiten Reflektionsbereich. Durch diese Konstruktion können Asymmetrien eines einzelnen Tripels ausgeglichen werden. Die Asymmetrien werden durch einen Verlust der Totalreflektion hervorgerufen und zeigen sich in einer einseitigen Abbruchslinie der Funktion des Rückstrahlwerts in Abhängigkeit vom Einstrahlwinkel. Durch den Sattel weist zumindest noch der Teil der Tripel auf der gegenüberliegenden Seite des Sattels eine Reflektion auf. Es ist für den Ausgleich der Asymmetrie weiter vorteilhaft, wenn auch die einzelnen Tripel spiegelsymmetrisch zur Spiegelebene ausgerichtet sind. Die spiegelsymetrische Ausrichtung der Tripel kann bei Bedarf auch im ersten Reflektionsbereich ohne Beeinträchtigung der erwünschten Reflektionseigenschaften vorgenommen werden.

Gemäß einer vorteilhaften Ausführungsform der Erfindung ist die Schlüsselweite der Tripel im zweiten Reflektionsbereich um mindestens den Faktor 5 kleiner als eine Schlüsselweite der Tripel im ersten Reflektionsbereich. Optimal ist ein Faktor von 10, um den sich die beiden Schlüsselweiten unterscheiden. Beispielsweise haben die Tripel des ersten Reflektionsbereichs eine Schlüsselweite von 2 mm bis 3 mm und die Tripel des zweiten Reflektionsbereichs eine Schlüsselweite zwischen 200 µm bis 300 µm. Kleine Tripelgrößen neigen naturgemäß, z.B. auf Grund von Beugungseffekten, zu einer breiteren Streuung des einfallenden Lichts als große Tripel. Daher unterstützen kleine Tripel im zweiten Reflektionsbereich die Weitwinkelverteilung.

Tripel mit Schlüsselweiten zwischen 200 µm und 300 µm lassen sich beispielsweise herstellen, indem für das Formnest der Spritzgussform für den zweiten Reflektionsbereich jeder Tripel separat aus dem Vollen geschnitten wird. Im ersten Reflektionsbereich ist die Streuung kleiner Tripel unerwünscht, daher sind dafür übliche Schlüsselweiten im Millimeterbereich vorteilhaft.

Konstruktionsbedingt haben kleine Tripel im zweiten Reflektionsbereich zusätzlich den Vorteil, dass eine Wölbung der Oberfläche sich nicht auf die Dicke des Retroreflektorelements auswirkt, weil die räumliche Erstreckung der Tripel des ersten Reflektionsbereichs entlang einer optischen Achse größer ist, als der durch die Krümmung verursachte Höhenunterschied der Grundfläche des zweiten Reflektionsbereich zuzüglich der räumlichen Erstreckung der Tripel des zweiten Reflektionsbereichs.

Für einen besseren optischen Gesamteindruck eines erfindungsgemäßen Retroreflektionselements hat es sich als vorteilhaft erwiesen, wenn die Struktur des zweiten Reflektionsbereichs doppelt an zwei gegenüberliegenden Seiten des ersten Reflektionsbereichs vorhanden ist. Mit anderen Worten weist die Struktur einen dritten Reflektionsbereich auf, der an einer dem zweiten Reflektionsbereich gegenüberliegenden Seite des ersten Reflektionsbereichs angeordnet ist. Die Struktur des dritten Reflektionsbereichs ist eine Spiegelung der Struktur des zweiten Reflektionsbereichs. Die Spiegelebene verläuft parallel zu der Grenzfläche des ersten mit dem zweiten Reflektionsbereichs durch die Mitte des ersten Reflektionsbereichs.

Geeignete Materialien zur Verwendung für Retroreflektorelemente im Straßenverkehr sind Polymethylmethacrylat (PMMA) und Polycarbonat (PC). Diese Kunststoffe können beispielsweise farblos sein, oder in orange, rötlichen oder anderen im Straßenverkehr üblichen Farbtönen eingefärbt sein. Es versteht sich, dass die Strukturen je nach verwendeter Farbe, z.B. in Anlehnung an die in der EN 12899:3-2007 verwendeten Farbfaktoren variieren können.

Vorzugsweise ist ein Flächeninhalt des zweiten Reflektionsbereichs um einen Faktor zwischen 3 und 10 kleiner als ein Flächeninhalt des ersten Reflektionsbereichs. Dadurch trifft das meiste Licht auf die Tripel des ersten Reflektionsbereichs und wird senkrecht zur Vorzugsrichtung unter einem engen Winkel zurückgestrahlt. Wenn der Flächeninhalt des ersten Reflektionsbereichs mehr als 95 % der gesamten reflektierenden Fläche beträgt, dominiert die schmale Winkelverteilung des ersten Reflektionsbereichs und die erfindungsgemäße Weitwinkligkeit des zweiten Reflektionsbereichs geht verloren.

Die nachfolgenden Figuren sollen die Erfindung ohne die Allgemeinheit der Offenbarung einzuschränken näher erläutern. Es zeigen:
- Figur 1: Eine beispielhafte Einteilung eines erfindungsgemäßen Retroreflektorelements
- Figur 2:: beispielhafte Reflektionskurven des gesamten Retroreflektorelements aus Figur 1
- Figur 3:: beispielhafte Reflektionskurven des ersten Reflektionsbereichs bei verdecktem ersten Reflektionsbereich.

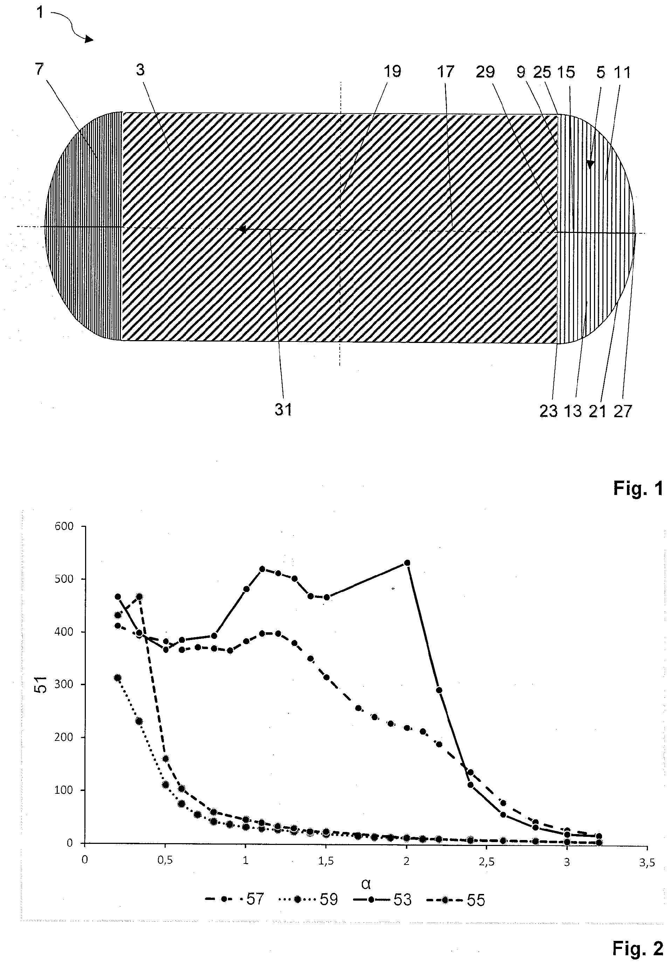

**In** **Figur 1** ist eine beispielhafte Aufteilung eines erfindungsgemäßen Retroreflektorelements 1 in einen ersten 3, einen zweiten 5 und einen dritten Reflektionsbereich 7 gezeigt. Auf die Darstellung der einzelnen Tripel und der Krümmung der Oberfläche im zweiten und dritten Reflektionsbereich 5, 7 wurde verzichtet. Eine Vorzugsrichtung 31 der Rückstrahlung verläuft in einer Haupterstreckungsrichtung des Retroreflektorelements 1. Da im Straßenverkehr eine Lichtquelle und ein Empfänger, nämlich ein Scheinwerfer und ein Auge eines Fahrers häufig näherungsweise vertikal zueinander versetzt angeordnet sind, sind im Folgenden nur die beiden Ausrichtungen der Haupterstreckungsachse in vertikaler und horizontaler Richtung von Interesse. Bei vertikaler Ausrichtung wird also parallel zur Vorzugsrichtung beobachtet, bei horizontaler Ausrichtung senkrecht dazu.

Der zweite Reflektionsbereich 5 ist unterteilt in einen ersten Unterbereich 11 und einen zweiten Unterbereich 13. Die beiden Unterbereiche 11, 13 werden durch eine erste Spiegel-, bzw. Symmetrieebene 17 geteilt. In dieser Symmetrieebene 17 liegt der Sattel 15. Diese Symmetrieebene steht senkrecht auf einer Grenzfläche 9 zwischen dem ersten 3 und dem zweiten Reflektionsbereich 5.

Folgt man der gekrümmten Oberfläche des zweiten Reflektionsbereichs 5 entlang der Grenzfläche 9 so steigt ein Höhenprofil von einem ersten Randpunkt 23 bis zum Sattel 15 entlang eines ersten Kreisbogens an und fällt vom Sattel 15 bis zu einem gegenüberliegenden zweiten Randpunkt 25 entlang eines zweiten Kreisbogens spiegelsymmetrisch zum ersten Kreisbogen ab. Auch das Höhenprofil entlang des Sattels 15 folgt einem dritten Kreisbogen. Dabei ist ein Schnittpunkt 29 zwischen dem Sattel 15 und der Grenzfläche 9 der höchste Punkt und ein dritter Randpunkt 27 am der Grenzfläche 9 abgewandten Ende des Sattels 15 der tiefste Punkt. Die Radien der den drei Kreisbögen zugeordneten Kreise sind gleich groß. Wenn die Abstände zwischen dem ersten Randpunkt 23 und dem Schnittpunkt 29, dem zweiten Randpunkt 25 und dem Schnittpunkt 29 sowie dem dritten Randpunkt 27 und dem Schnittpunkt 29 gleich sind, beispielsweise wenn der komplette Rand 21 des Retroreflektionselements 1 im zweiten Reflektionsbereich 5 halbkreisförmig ausgebildet ist, so liegen die Randpunkte 23, 25, 27 auf gleichen Höhenniveau. Als Höhe soll hier der Abstand eines Punkts der Oberfläche von einer parallel zur Zeichenebene der Figur 1 verlaufenden Lichteintrittsfläche (nicht dargestellt) des Retroreflektionselements 1 verstanden werden.

Der dritte Reflektionsbereich 7 befindet sich an einer dem zweiten Reflektionsbereich 5 gegenüberliegenden Seite des ersten Reflektionsbereichs 3. Die Struktur des dritten Reflektionsbereichs 7 ist spiegelsymmetrisch zur Struktur des zweiten Reflektionsbereichs 5. Die Spiegel- bzw. Symmetrieebene 19 verläuft durch die Mitte des ersten Reflektionsbereichs 3. Demnach ist die Oberfläche auch im dritten Reflektionsbereich 7 gekrümmt.

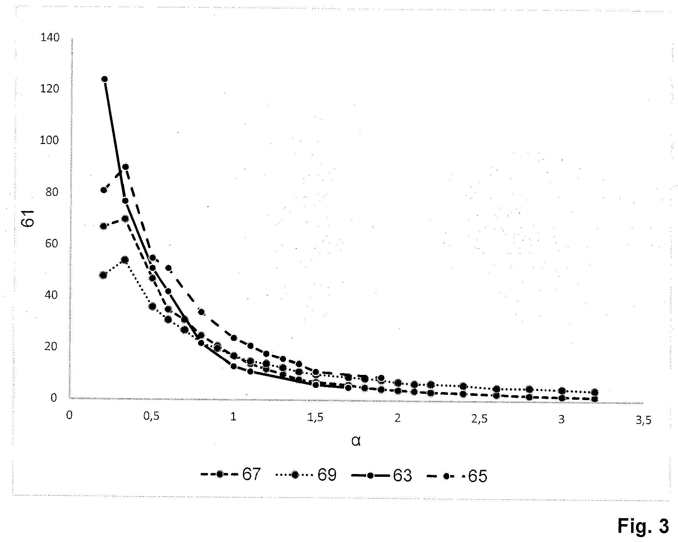

**Die** **Figuren 2** **und** 3 zeigen Reflektionskurven also Rückstrahlwerte 51, 61 verschiedener erfindungsgemäßer Retroreflektionselemente aufgetragen über dem Beobachtungswinkel α. Die Rückstrahlwerte 51, 61 sind in mCd / lux angegeben, der Beobachtungswinkel α in Grad. Die Messung wurde unter einem Anstrahlwinkel (Definition nach DIN 57520) βv von 5° und βh von 0° durchgeführt. Dabei ist in **Figur 2** der Rückstrahlwert des gesamten Retroreflektionselements 1 dargestellt. **In** **Figur 3** ist der Rückstrahlwert 61 des zweiten 5 und dritten Reflektionsbereichs 7 gezeigt. Der erste Reflektionsbereich 3 wurde abgedeckt. Der Rückstrahlwert des ersten Reflektionsbereichs lässt sich rechnerisch aus der Differenz der Werte aus Figur 2 und Figur 3 bestimmen.

In den Figuren 2 und 3 sind jeweils die Rückstrahlwerte 51,61 eines transparenten Elements in vertikaler Ausrichtung 53, 63 und in horizontaler Ausrichtung 55, 65 sowie eines orangenen Elements aus PC in vertikaler Ausrichtung 57, 67 und in horizontaler Ausrichtung 59, 69 aufgetragen. Es zeigt sich, dass der erste Reflektionsbereich 3 bei einer horizontalen Ausrichtung einen hohen Rückstrahlwert für einen sehr engen Winkelbereich bis 0,5° liefert und dann schnell abfällt. Bei vertikaler Ausrichtung bleibt der Rückstrahlwert bis zu einem Beobachtungswinkel von mindestens 1,5° innerhalb eines Bandes zwischen 75 % und 100% eines Maximalwerts. Der zweite und der dritte Reflektionsbereich 5, 7 tragen mit einem niedrigeren Rückstrahlwert, der aber über einen breiten Beobachtungswinkel sowohl bei vertikaler Ausrichtung als auch bei horizontaler Ausrichtung erzielt wird, zur Sichtbarkeit des Retroreflektionselements 1 bei. Sie sorgen dafür, dass das Retroreflektionselement 1 auch im Nahbereich, also im Abstand eines Fahrzeugs wenige Meter vor dem Retroreflektionselement 1 sichtbar bleibt.

**Bezugszeichenliste:**

| | |
|---|---|
| 1 | Retroreflektorelement |
| 3 | erster Reflektionsbereich |
| 5 | zweiter Reflektionsbereich |
| 7 | dritter Reflektionsbereich |
| 9 | Grenzfläche zwischen dem ersten und dem zweiten Reflektionsbereich |
| 11 | erster Unterbereich |
| 13 | zweiter Unterbereich |
| 15 | Sattel |
| 17 | Spiegelebene zwischen dem ersten und dem zweiten Unterbereich |
| 19 | Spiegelebene des zweiten und dritten Reflektionsbereichs |
| 21 | Rand |
| 23 | erster Randpunkt |
| 25 | zweiter Randpunkt |
| 27 | dritter Randpunkt |
| 29 | Schnittpunkt |
| 31 | Vorzugsrichtung |
| 51 | Rückstrahlwert in mCd/ lux |
| 53 | transparentes Material vertikal beobachtet |
| 55 | transparentes Material horizontal beobachtet |
| 57 | oranges Retroreflektorelement aus PC vertikal beobachtet |
| 59 | oranges Retroreflektorelement aus PC horizontal beobachtet |
| 61 | Rückstrahlwert des zweiten und dritten Reflektionsbereichs in mCd/ lux |
| 63 | transparentes Material vertikal beobachtet |
| 65 | transparentes Material horizontal beobachtet |
| 67 | oranges Retroreflektorelement aus PC vertikal beobachtet |
| 69 | gelbes Retroreflektorelement aus PC horizontal beobachtet |
| α | Beobachtungswinkel in ° |

## Patentansprüche

1. Retroreflektorelement (1) zur Verwendung im Straßenverkehr, beispielsweise zur Verwendung an Baustellen, umfassend eine Anordnung aus einer Vielzahl von Tripeln mit jeweils drei nahezu senkrecht aufeinanderstehenden Seitenflächen, **dadurch gekennzeichnet, dass** das Retroreflektorelement (1) eine Vorzugsrichtung (31) hat und mindestens einen ersten Reflektionsbereich (3), der zur Rückstrahlung eines einfallenden Strahls unter einem Beobachtungswinkel (α) zwischen 0,3° und 1,8° ausgelegt ist, wenn die Vorzugsrichtung (31) bezüglich eines den Strahl aussendenden Senders und eines den retroflektierten Strahl empfangenden Empfängers so ausgerichtet ist, dass die Projektion einer den Mittelpunkt des Senders mit dem Mittelpunkt des Empfängers verbindenden Geraden auf eine Lichteintrittsfläche des Retroreflektorelements parallel zur Vorzugsrichtung (31) ist, und einen zweiten Reflektionsbereich (5) aufweist, der zur Rückstrahlung eines einfallenden Strahls unter einem Beobachtungswinkel (α) zwischen 0,5° und 2° ausgelegt ist, wenn die Vorzugsrichtung (31) bezüglich des Senders und des Empfängers so ausgerichtet ist, dass die Projektion einer den Mittelpunkt des Senders mit dem Mittelpunkt des Empfängers verbindenden Geraden auf die Lichteintrittsfläche des Retroreflektorelements senkrecht zur Vorzugsrichtung (31) ist.

2. Retroreflektorelement (1) nach Anspruch 1,
wobei die Tripel des zweiten Reflektionsbereichs (5) auf einer gekrümmten Oberfläche, vorzugsweise auf einer sphärisch gekrümmten Oberfläche, angeordnet sind.

3. Retroreflektorelement (1) nach Anspruch 2, wobei die Oberfläche des zweiten Reflektionsbereichs (5) einen Krümmungsradius aufweist, der um einen Faktor zwischen 100 und 300 bevorzugt zwischen 175 und 225 größer ist als eine Schlüsselweite der Tripel des zweiten Reflektionsbereichs (5).

4. Retroreflektorelement (1) nach einem der vorherigen Ansprüche 2 oder 3, wobei der zweite Reflektionsbereich (5) zwei Unterbereiche (11, 13) aufweist, die zueinander bezüglich einer Spiegelebene (17) derart gespiegelt sind, dass die Krümmungen an der Spiegelebene (17) einen Sattel (15) bilden.

5. Retroreflektorelement (1) nach einem der vorherigen Ansprüche, wobei eine Schlüsselweite der Tripel im zweiten Reflektionsbereich (5) um mindestens den Faktor 5 kleiner, bevorzugt um mindestens einen Faktor 10 kleiner ist als eine Schlüsselweite der Tripel im ersten Reflektionsbereich (3).

6. Retroreflektorelement (1) nach einem der vorherigen Ansprüche, wobei das Retroreflektorelement (1) einen dritten Reflektionsbereich (7) aufweist, der vorzugsweise an einer dem zweiten Reflektionsbereich (5) gegenüberliegenden Seite des ersten Reflektionsbereichs (3) angeordnet ist.

7. Retroreflektorelement (1) nach Anspruch 6, wobei eine Struktur des dritten Reflektionsbereichs (7) eine Spiegelung einer Struktur des zweiten Reflektionsbereichs (5) bezüglich einer weiteren Spiegelebene (19) ist, wobei die weitere Spiegelebene (19) vorzugsweise parallel zu einer Grenzfläche (9) des ersten mit dem zweiten Reflektionsbereichs verläuft.

8. Retroreflektorelement (1) nach einem der vorherigen Ansprüche 1 bis 7, wobei das Retroreflektorelement (1) aus einem der Materialien Polymethylmethacrylat oder Polycarbonat besteht.

9. Retroreflektorelement (1) nach einem der vorherigen Ansprüche, wobei das Retroreflektorelement (1), farblos, rot oder orange eingefärbt ist.

## Claims

1. Retroreflector element (1) for use in road traffic, for example for use at construction sites, comprising an arrangement composed of a plurality of triples, each having three side surfaces that stand almost perpendicular on one another, **characterized in that** the retroreflector element (1) has a preferred direction (31) and has at least a first reflection region (3), which is designed for reflecting an incident beam at an observation angle (α) between 0.3° and 1.8°, when the preferred direction (31) is oriented, with regard to an emitter that emits the beam, and a receiver that receives the retroflected beam, in such a manner that the projection of a straight line that connects the center point of the emitter with the center point of the receiver onto a light entry surface of the retroreflector element is parallel to the preferred direction (31), and has a second reflection region (5), which is designed for reflecting an incident beam at an observation angle (α) between 0.5° and 2°, when the preferred direction (31) is oriented, with regard to the emitter and the receiver, in such a manner that the projection of a straight line that connects the center point of the emitter with the center point of the receiver onto the light entry surface of the retroreflector element is perpendicular to the preferred direction (31).

2. Retroreflector element (1) according to claim 1,
wherein the triples of the second reflection region (5) are disposed on a curved surface, preferably on a spherically curved surface.

3. Retroreflector element (1) according to claim 2, wherein the surface of the second reflection region (5) has a radius of curvature that is greater by a factor between 100 and 300, preferably between 175 and 225 than a width across flats of the triples of the second reflection region (5).

4. Retroreflector element (1) according to one of the preceding claims 2 or 3, wherein the second reflection region (5) has two sub-regions (11, 13), which are mirror images of one another with reference to a mirror plane (17), in such a manner that the curvatures at the mirror plane (17) form a saddle (15).

5. Retroreflector element (1) according to one of the preceding claims, wherein a width across flats of the triples in the second reflection region (5) is smaller by at least the factor of 5, preferably by at least a factor of 10 than a width across flats of the triples in the first reflection region (3).

6. Retroreflector element (1) according to one of the preceding claims, wherein the retroreflector element (1) has a third reflection region (7), which preferably is disposed on a side of the first reflection region (3) that lies opposite the second reflection region (5).

7. Retroreflector element (1) according to claim 6, wherein a structure of the third reflection region (7) is a mirror image of a structure of the second reflection region (5) with reference to a further mirror plane (19), wherein the further mirror plane (19) preferably runs parallel to a boundary surface (9) of the first with the second reflection region.

8. Retroreflector element (1) according to one of the preceding claims 1 to 7, wherein the retroreflector element (1) consists of one of the materials polymethyl methacrylate or polycarbonate.

9. Retroreflector element (1) according to one of the preceding claims, wherein the retroreflector element (1) is dyed to be colorless, red or orange.

## Revendications

1. Elément rétroréflecteur (1) destiné à être utilisé dans la circulation routière, par exemple à être utilisé sur des chantiers, comprenant un agencement d'une pluralité de trièdres présentant respectivement trois surfaces latérales presque perpendiculaires les unes aux autres,
**caractérisé en ce que** l'élément rétroréflecteur (1) présente une direction préférentielle (31), et présente au moins une première zone de réflexion (3) qui est conçue pour réfléchir un faisceau incident selon un angle d'observation (α) compris entre 0,3° et 1,8°, si la direction préférentielle (31) est orientée par rapport à un émetteur émettant le faisceau et à un récepteur recevant le faisceau rétroréfléchi de telle sorte que la projection d'une droite reliant le centre de l'émetteur au centre du récepteur sur une surface d'entrée de lumière de l'élément rétroréflecteur est parallèle à la direction préférentielle (31), et présente une deuxième zone de réflexion (5) qui est orientée pour réfléchir un faisceau incident selon un angle d'observation (α) compris entre 0,5° et 2°, si la direction préférentielle (31) est orientée par rapport à l'émetteur et au récepteur de telle sorte que la projection d'une droite reliant le centre de l'émetteur au centre du récepteur sur la surface d'entrée de lumière de l'élément rétroréflecteur est perpendiculaire à la direction préférentielle (31).

2. Elément rétroréflecteur (1) selon la revendication 1, dans lequel les trièdres de la deuxième zone de réflexion (5) sont disposés sur une surface courbe, de préférence sur une surface à courbure sphérique.

3. Elément rétroréflecteur (1) selon la revendication 2, dans lequel la surface de la deuxième zone de réflexion (5) présente un rayon de courbure qui est supérieur d'un facteur compris entre 100 et 300, de préférence entre 175 et 225, à une cote sur plats des trièdres de la deuxième zone de réflexion (5).

4. Elément rétroréflecteur (1) selon l'une quelconque des revendications précédentes 2 ou 3, dans lequel la deuxième zone de réflexion (5) présente deux zones secondaires (11, 13) qui sont en miroir l'une par rapport à l'autre, en se référant à un plan de symétrie (17), de telle sorte que les courbures au niveau du plan de symétrie (17) forment une selle (15).

5. Elément rétroréflecteur (1) selon l'une quelconque des revendications précédentes, dans lequel une cote sur plats des trièdres dans la deuxième zone de réflexion (5) est inférieure au moins du facteur 5, de préférence au moins d'un facteur 10, à une cote sur plats des trièdres dans la première zone de réflexion (3).

6. Elément rétroréflecteur (1) selon l'une quelconque des revendications précédentes, dans lequel l'élément rétroréflecteur (1) présente une troisième zone de réflexion (7) qui est disposée de préférence sur une face de la première zone de réflexion (3), opposée à la deuxième zone de réflexion (5).

7. Elément rétroréflecteur (1) selon la revendication 6, dans lequel une structure de la troisième zone de réflexion (7) est une image miroir d'une structure de la deuxième zone de réflexion (5) par rapport à un autre plan de symétrie (19), dans lequel l'autre plan de symétrie (19) s'étend de préférence en parallèle à une surface limite (9) entre la première et la deuxième zone de réflexion.

8. Elément rétroréflecteur (1) selon l'une quelconque des revendications précédentes 1 à 7, dans lequel l'élément rétroréflecteur (1) est composé d'un des matériaux polyméthacrylate de méthyle ou polycarbonate.

9. Elément rétroréflecteur (1) selon l'une quelconque des revendications précédentes, dans lequel l'élément rétroréflecteur (1) est incolore, ou de couleur rouge ou orange.
